# EUROPEAN PATENT APPLICATION

(11) **EP 4 350 040 A2**
(43) Date of publication of application: **10.04.2024**
(21) Application number: 23194921.5
(22) Date of filing: 01.09.2023
(51) Int. Cl.: C25B 1/04, C25B 9/23, C25B 9/77, C25B 11/032, C25B 11/052, C25B 11/081

(54) **MEMBRANE ELECTRODE ASSEMBLY, ELECTROCHEMICAL CELL, STACK AND ELECTROLYZER**

(30) Priority: 03.10.2022 JP 2022159834
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: FUKAZAWA, Taishi, Tokyo (JP); NAKANO, Yoshihiko, Tokyo (JP); YOSHINAGA, Norihiro, Tokyo (JP)
(74) Representative: Marks & Clerk LLP

(57) **Abstract**

A membrane electrode assembly of an embodiment includes: a first electrode including a first diffusion layer, and a first catalyst layer; a second electrode for generating hydrogen, the second electrode including a second diffusion layer, a second catalyst layer including a porous catalyst layer including a porous precious metal or sheet-like precious metal, and a hydrophobic moisture management layer provided between the second catalyst layer and the second diffusion layer, the hydrophobic moisture management layer including carbon particles and carbon fibers, a weight of the carbon fibers being between lwt% and 20wt% of a weight of the second diffusion layer; and an electrolyte membrane provided between the first electrode and the second electrode, the first catalyst layer being provided between the first diffusion layer and the electrolyte membrane, and the second catalyst layer being provided between the second diffusion layer and the electrolyte membrane.

## Description

### CROSS-REFERENCE TO RELATED APPLICATION

This application is based upon and claims the benefit of priority from Japanese Patent Application No.2022-159834, filed on October 3, 2022, the entire contents of which are incorporated herein by reference.

### FIELD

Embodiments described herein relate generally to the membrane electrode assembly, the electrochemical cell, the stack and the electrolyzer.

### BACKGROUND

In recent years, research on electrochemical cells has actively been conducted. Among the electrochemical cell, for example, polymer electrolyte water electrolysis cells (PEMEC:Polymer Electrolyte MembraneElectrolysis Cell) are expected to be used as hydrogen-generation devices for large-scale energy-storage systems. In order to ensure sufficient durability and electrolytic characteristics, noble metal catalysts such as platinum (Pt) nanoparticle catalysts for the cathode of PEMEC and iridium (Ir) nanoparticle catalyst for the anode are commonly used. In addition, a method of obtaining hydrogen from ammonia has been studied.

### BRIEF DESCRIPTION OF THE DRAWINGS

FIG. 1 is a schematic cross-sectional view of the membrane electrode assembly of a first embodiment.
FIGS. 2A-C is a photomicrograph of the catalyst unit of the first embodiment.
FIG. 3 is a schematic diagram of the electrochemical cell according to the second embodiment.
FIG. 4 is a schematic diagram of the stack according to a third embodiment.
FIG. 5 is a schematic diagram of the electrolyzer according to a fifth embodiment.

### DETAILED DESCRIPTION

A membrane electrode assembly of an embodiment includes a first electrode including a first diffusion layer, and a first catalyst layer; a second electrode for generating hydrogen, the second electrode including a second diffusion layer, a second catalyst layer including a porous catalyst layer including a porous precious metal or sheet-like precious metal, and a hydrophobic moisture management layer provided between the second catalyst layer and the second diffusion layer, the hydrophobic moisture management layer including carbon particles and carbon fibers, a weight of the carbon fibers being between 1wt% and 20wt% of a weight of the second diffusion layer; and an electrolyte membrane provided between the first electrode and the second electrode, the first catalyst layer being provided between the first diffusion layer and the electrolyte membrane, and the second catalyst layer being provided between the second diffusion layer and the electrolyte membrane.

Hereinafter, embodiments will be described with reference to the drawings. In the drawings, the same or similar parts are denoted by the same or similar reference numerals.

The physical property values herein are values at 25 [° C.] and at 1 [atom]. The thickness of each member is an average value of the distances in the lamination direction.

### (First Embodiment)

A membrane electrode assembly of the present embodiment includes a first electrode including a first diffusion layer, and a first catalyst layer; a second electrode for generating hydrogen, the second electrode including a second diffusion layer, a second catalyst layer including a porous catalyst layer including a porous precious metal or sheet-like precious metal, and a hydrophobic moisture management layer provided between the second catalyst layer and the second diffusion layer, the hydrophobic moisture management layer including carbon particles and carbon fibers, a weight of the carbon fibers being between 1wt% and 20wt% of a weight of the second diffusion layer; and an electrolyte membrane provided between the first electrode and the second electrode, the first catalyst layer being provided between the first diffusion layer and the electrolyte membrane, and the second catalyst layer being provided between the second diffusion layer and the electrolyte membrane.

Hereinafter, in the embodiment, the water electrolysis will be described as an example.

The operating method of the electrolyzer of the embodiment can be used for the operating method of the electrolyzer of ammonia. The membrane electrode assembly 100 of the embodiment can be used as the membrane electrode assembly of the electrolyzer for synthesizing ammonia. The operating method of the electrolyzer of the embodiment is applicable to the operating method of the electrolyzer in which ultrapure water is supplied to the anode, the water is decomposed at the anode to produce proton and oxygen, the produced proton passes through the electrolyte membrane, and nitrogen supplied to the cathode, the proton and the electron are connected to produce ammonia.

The operating method of the electrolyzer of the embodiment can be used for the operatiing method of the electrolyzer which electrolyzes ammonia to produce hydrogen. The membrane electrode assembly 100 of the embodiment can be used in a device for electrolyzing ammonia to produce hydrogen. The operating method of the electrolyzer of the embodiment is applicable to the operating method of the electrolyzer used for the electrolysis of ammonia decomposition in which ammonia is supplied to the cathode, the ammonia is decomposed at the cathode to produce proton and nitrogen, the produced proton passes through the electrolyte membrane, and the proton and the electron are connected to produce the hydrogen.

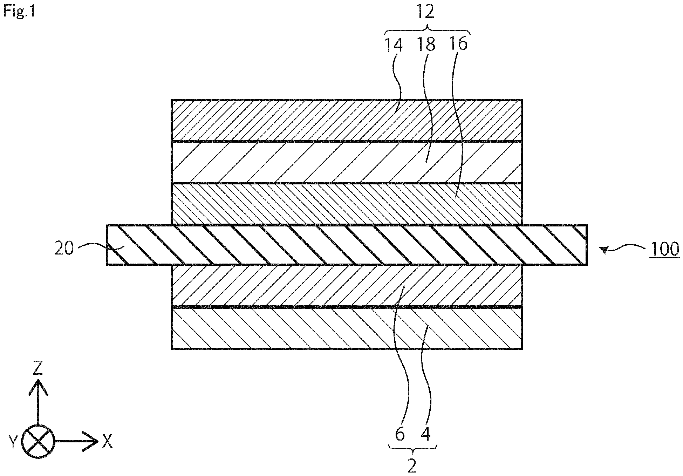

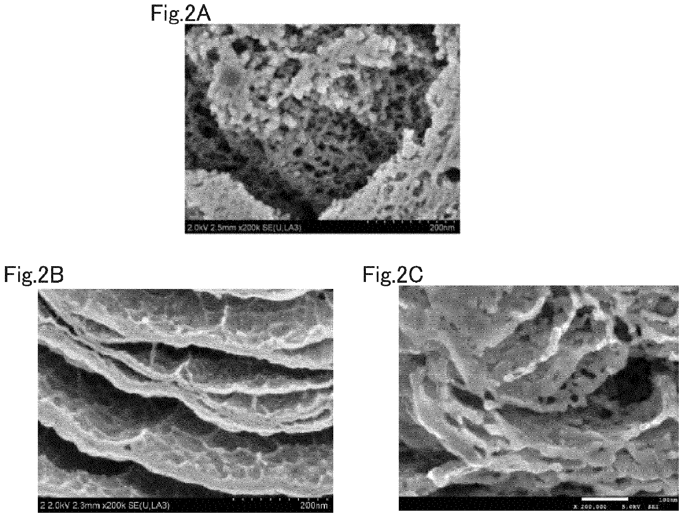

FIG. 1 is a schematic cross-sectional view of the membrane electrode assembly 100 according to the present embodiment. FIG. 2A-C are micrographs of the catalyst unit of the present embodiment.

The membrane electrode assembly 100 of the present embodiment will be described with reference to FIGS. 1 and 2A-C.

The membrane electrode assembly 100 includes a first electrode 2, a second electrode 12, and an electrolyte membrane 20.

The first electrode 2 is, for example, the anode electrode. The first electrode 2 has a first diffusion layer 4 and a first catalyst layer 6.

The second electrode 12 is, for example, the cathode electrode. The second electrode 12 includes a second diffusion layer 14, a second catalyst layer 16, and a hydrophobic moisture management layer 18.

The electrolyte membrane 20 is provided between the first electrode 2 and the second electrode 12. The first catalyst layer 6 is provided between the first diffusion layer 4 and the electrolyte membrane 20. The second catalyst layer 16 is provided between the second diffusion layer 14 and the electrolyte membrane 20. The hydrophobic moisture management layer 18 is provided between the second catalyst layer 16 and the second diffusion layer 14.

Here, the X-direction (X-axis), the Y-direction (Y-axis) intersecting perpendicularly to the X-direction (X-axis), and the Z-direction (Z-axis) intersecting perpendicularly to the X-direction (X-axis) and the Y-direction (Y-axis) are defined. The first diffusion layer 4 and the first catalyst layer 6 of the first electrode 2, the electrolyte membrane 20, the second diffusion layer 14, the second catalyst layer 16 and the hydrophobic moisture management layer 18 of the second electrode 12, for example, extend in the X and Y directions. The first diffusion layer 4 and the first catalyst layer 6 of the first electrode 2, the electrolyte membrane 20, the second diffusion layer 14, the second catalyst layer 16 and the hydrophobic moisture management layer 18 of the second electrode 12, for example, extend in the X and Y directions. The first electrode 2, the electrolyte membrane 20, and the second electrode 12 are stacked in the Z-direction, for example.

The first diffusion layer 4 is preferably porous and highly conductive. The first diffusion layer 4 is a porous member that passes through gases and fluids. The first diffusion layer 4 is, for example, a carbon paper or a metal mesh. As the metal mesh, a porous substrate of the valve metal is preferable. The porous substrate of the valve metal is preferably the porous substrate containing one or more metals selected from the group consisting of titanium, aluminum, tantalum, niobium, hafnium, zirconium, zinc, tungsten, bismuth, and antimony, or the porous substrate of one metal selected from the group consisting of titanium, aluminum, tantalum, niobium, hafnium, zirconium, zinc, tungsten, bismuth, and antimony.

It is particularly preferable that the first diffusion layer 4 of the present embodiment is a porous substrate of a titanium-containing valve metal.

The film thickness of the first diffusion layer 4 is, for example, 50µm or more and 200µm or less.

The first catalyst layer 6 is provided between the first diffusion layer 4 and the electrolyte membrane 20. The first catalyst layer 6 includes catalyst metal. The first catalyst layer 6 is preferably a particle of the catalyst metal, wherein the catalyst metal is not supported on the carrier. The first catalyst layer 6 preferably includes a porous catalyst layer or a laminated structure including porous structure or void layers. The catalyst metal is not particularly limited, and preferably contains, for example, one or more selected from the group consisting of Ir, Ru and Pt. The catalyst metal is preferably a metal, an alloy or a metal-oxide.

The metallic content per area of the first catalyst layer 6 is preferably 0.02[mg/cm ² ] or more and 1.0[mg/cm ² or less, more preferably 0.05[mg/cm ² ] or more and 0.5[mg/cm ² or less. The sum of the masses can be measured, for example, with a ICP mass spectrometer (Inductively Coupled Plasma-Mass Spectrometer:ICP-MS).

The film thickness of the first catalyst layer 6 is, for example, 0.1µm or more and 20µm or less.

The porosity of the first catalyst layer 6 is preferably 10 [%] or more and 90 [%] or less, more preferably 30 [%] or more and 70 [%] or less.

It should be noted that an intermediate layer (not shown) may be provided between the first diffusion layer 4 and the first catalyst layer 6.

As the second diffusion layer 14, it is preferable to use a porous and highly conductive material. The second diffusion layer 14 is a porous member that passes through gases and fluids. The second diffusion layer 14 is, for example, the carbon paper or the metal mesh. As the metal mesh, a porous substrate of the valve metal is preferable. The porous substrate of the valve metal is preferably the porous substrate containing one or more metals selected from the group consisting of titanium, aluminum, tantalum, niobium, hafnium, zirconium, zinc, tungsten, bismuth, and antimony, or the porous substrate of one metal selected from the group consisting of titanium, aluminum, tantalum, niobium, hafnium, zirconium, zinc, tungsten, bismuth, and antimony.

The second catalyst layer 16 includes a catalytic metal. The second catalyst layer 16 is preferably a particle of the catalyst metal, wherein the catalyst metal is not supported on the carrier. The second catalyst layer 16 is preferably the porous catalyst layer. The catalyst metal is not particularly limited, and includes, for example, one or more selected from the group consisting of Pt, Rh, Os, Ir, Pd and Au. It is preferable for the catalyst metal to include at least one selected from the group consisting of such catalyst materials. The catalyst metal is preferably a metal, an alloy or a metal-oxide.

The metallic content per area of the second catalyst layer 16 is preferably 0.02[mg/cm2] or more and 1.0[mg/cm2] or less, more preferably 0.05[mg/cm2] or more and 0.5[mg/cm2] or less. The sum of the masses can be measured, for example, with a ICP mass spectrometer (Inductively Coupled Plasma-Mass Spectrometer:ICP-MS).

The porosity of the second catalyst layer 16 is preferably 10 [%] or more and 90 [%] or less, and more preferably 30 [%] or more and 70 [%] or less.

The film thickness of the second catalyst layer 16 is, for example, 0.1µm or more and 2µm or less.

FIG. 2A shows a SEM(Scanning Electron Microscope) image of the porous catalyst layer including the porous precious metal or sheet-like precious metal. FIG. 2B and FIG. 2C show SEM images of the porous catalyst layer porous structures including the porous precious metal or sheet-like precious metal. In laminated structure including the void layers, it is preferable that the adjacent nanosheets are partially integrated with each other. Introduction of the nanoceramic material layer into laminated structure or disposing a porous nanocarbon layer containing fibrous carbon between adjacent nanosheets or material layers can improve durability and robustness. The porous catalyst layer containing such porous precious metal or sheet-like precious metal can be used in the first catalyst layer 6 and the second catalyst layer 16.

The hydrophobic moisture management layer 18 is a porous hydrophobic layer. The hydrophobic moisture management layer 18 includes carbon particles, carbon fibers between 1wt% and 20wt% of the weight of the second diffusion layer 14, and a water repellent agent. When the carbon fibers in the hydrophobic moisture management layer 18 are less than 1wt% of the weight of the second diffusion layer 14, the hydrogen gas generated is not successfully discharged toward the flow path due to the insufficient diffusion, and the gas stagnates between the electrolyte membrane and the catalyst layer, causing the electrolyte membrane and the catalyst layer to peel off. In addition, when the carbon fibers in the hydrophobic moisture management layer 18 are more than 20wt% of the weight of the second diffusion layer 14, porosity of the hydrophobic moisture management layer increases and the conductivity decreases.

The thickness of the hydrophobic moisture management layer 18 is preferably 10µm or more and 50µm or less. When the thickness of the hydrophobic moisture management layer 18 is less than 10µm, the water repellent function of the hydrophobic moisture management layer 18 is weak, and the water that has migrated from the anode through the electrolyte membrane is not sufficiently discharged, the diffusion overvoltage is increased, and the cell voltage is increased. When the thickness of the hydrophobic moisture management layer 18 is more than 50µm, the diffusion overvoltage increases because the gas hardly diffuses, and the cell voltage increases.

The carbon particle is, for example, carbon black. Examples of the carbon particle include Ketjen Black (trademark), acetylene Black, Balkan(trademark), and activated carbon, etc.

As the carbon fiber, for example, a single-walled carbon nanotube, a multi-walled carbon nanotube, or a carbon nanofiber can be used.

Fluoropolymers such as polytetrafluoroethylene (PTFE), polyvinylidene fluoride (PVDF), 4-fluoroethylene/6-fluoropropylene copolymer (FEP), and tetrafluoroethylene/perfluoroethylvinyl ether copolymer (PFA) can be used as the water repellent agent.

The average primary particle size of the carbon particles and the carbon fibers is preferably 10nm or more and 300nm or less. The average primary particle size of the carbon particles and the carbon fibers is more preferably 25nm or more and 200nm or less, 30nm or more and 150nm or less, and 30nm or more and 100nm or less. The carbon fiber has a ratio of the long side to the short side (long side/short side) of 10 or more. The carbon particle has a ratio of the long side to the short side of less than 10.

The average primary particle diameter of the carbon particles is determined from the average of the inscribed circle diameter and the circumscribed circle diameter of each particle or each fiber. The mean primary particle size of the carbon fiber is determined from the diameter of the carbon fiber. It is preferable to observe the cross-sectional at half the thickness of the hydrophobic moisture management layer 18 by a SEM.

It should be noted that an intermediate layer (not shown) may be provided between the second diffusion layer 14 and the hydrophobic moisture management layer 18 or between the hydrophobic moisture management layer 18 and the second catalyst layer 16.

The electrolyte membrane 20 is a proton-conducting membrane. The electrolyte membrane 20 is preferably a fluorine-based polymer or an aromatic hydrocarbon-based polymer having at least one or more selected from the group consisting of a sulfonate group, a sulfonimide group, and a sulfate group. The electrolyte membrane 20 is preferably a fluorine-based polymer having a sulfonate group. As the fluorine-based polymer including a sulfonic acid group, for example, Nafion (trademark, manufactured by DuPont Corporation), Flemion (trademark, manufactured by Asahi Kasei Co.), Selemion (trademark, manufactured by Asahi Kasei Co.), Aquavion (aquivion) (trademark, Solvay Specialty Polymers Co.), or Aciplex (trademark, manufactured by Asahi Glass Co.), etc. can be used.

The film thickness of the electrolyte membrane 20 can be appropriately determined in view of characteristics such as permeation characteristics and durability of the film. The thickness of the electrolyte membrane 20 is preferably not less than 20 [µm] and not more than 500 [µm], more preferably not less than 50 [µm] and not more than 300 [µm], and even more preferably not less than 80 [µm] and not more than 200 [µm], from the viewpoints of strength, dissolution resistance, and power properties of the membrane electrode assembly.

The electrolyte membrane 20 preferably includes a precious metal region on the side of the first electrode 2. The precious metal region includes the precious metal particle. The precious metal region is preferably present on the surface of the electrolyte membrane 20. The precious metal region is preferably composed of one region, but may be composed of a plurality of separate regions.

The precious metal particle is preferably a particle of one or more precious metals selected from the group consisting of Pt, Re, Rh, Ir, Pd and Ru. The precious metal particle may include alloy particle including one or more precious metals selected from the group consisting of Pt, Re, Rh, Ir, Pd and Ru. The precious metal particle is preferably a precious metal particle selected from the group consisting of Pt, Re, Rh, Ir, Pd and Ru. The precious metal particle is preferably a Pt particle. The precious metal particle is preferably a Re particle. The precious metal particle is preferably a Rh particle. The precious metal particle is preferably a Ir particle. The precious metal particle is preferably a Pd particle. The precious metal particle is preferably a Ru particle.

The precious metal particle oxidizes hydrogen generated at the second electrode 12 and passes through the electrolyte membrane 20. Hydrogen leakage can be suppressed by the precious metal particle. Since the precious metal particle is present on the side of the first electrode 2, it is difficult to oxidize the hydrogen discharged from the cathode side. The region in which the precious metal particle is present may also be provided in the electrolyte membrane 20 of the side of the second electrode 12.

Next, the operation and effect of the present embodiment will be described.

Consider that the second electrode 12 is used for hydrogen-generating applications. This is the case, for example, when the membrane electrode assembly 100 is used for the water electrolyzer. Specifically, in the first electrode 2, protons, oxygens, and electrons are produced from water. In addition, in the second electrode 12, protons generated in the first electrode 2 react with electrons to generate hydrogen. Here, the second catalyst layer 16 of the second electrode 12 includes the porous catalyst layer including porous precious metal or sheet-like precious metal.

When hydrogen gas is generated from the second electrode 12, the interface between the electrolyte membrane 20 and the second catalyst layer 16 may be peeled off. When the interface between the electrolyte membrane 20 and the second catalyst layer 16 is peeled off, the electric resistivity of the membrane electrode assembly 100 is significantly increased. This is believed to be due to the weak strength of the catalyst layer due to the lack of the carrier supported catalyst when the second catalyst layer 16 is the porous catalyst layer including porous precious metal or sheet-like precious metal.

Therefore, in the membrane electrode assembly 100 of the present embodiment, the second electrode 12 is provided between the second catalyst layer 16 and the second diffusion layer 14, and the second electrode 12 includes the hydrophobic moisture management layer 18 including the carbon particles and the carbon fibers whose weight is 1wt% or more and 20wt% or less of the weight of the second diffusion layer.

According to the membrane electrode assembly 100 of the present embodiment, since the carbon fibers including an appropriate weight is introduced, the hydrogen-gas permeability is improved. As a result, peeling off of the electrolyte membrane 20 and the second catalyst layer 16 is suppressed.

According to the membrane electrode assembly of the present embodiment, a highly reliable membrane electrode assembly can be provided.

### (Second Embodiment)

An electrochemical cell of the present embodiment is an electrochemical cell including the membrane electrode assembly of the first embodiment. Descriptions of the contents overlapping with those of the first embodiment will be omitted.

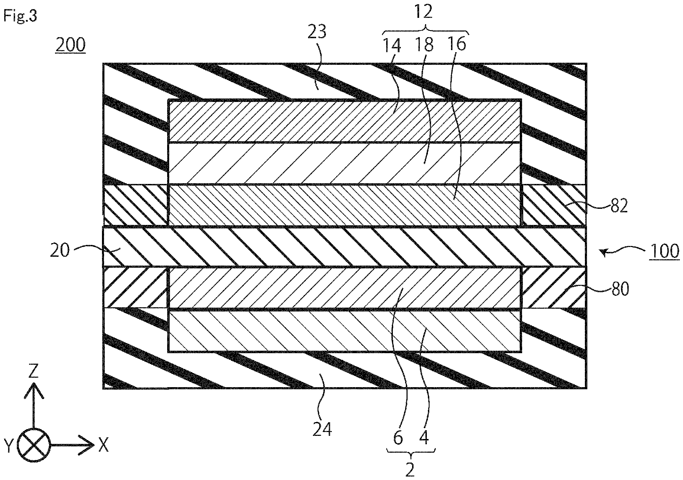

FIG. 3 is a schematic cross-sectional view of the electrochemical cell 200 according to the present embodiment. The electrochemical cell 200 will be described below using water electrolysis as an example, but hydrogen can be generated by decomposing ammonia or the like in addition to water.

The electrochemical cell 200 of the present embodiment includes the membrane electrode assembly 100, a separator 23, a separator 24, a seal 80, and a seal 82.

For example, water is supplied to the first electrode 2. In the first electrode 2, protons, oxygens, and electrons are generated from water. In the second electrode 12, the protons produced in the first electrode 2 react with electrons to produce hydrogen. One or both of the generated hydrogen and oxygen are used as fuel for a fuel cell, for example. With the separator 23 and the separator 24, the membrane electrode assembly 100 is tightened in the Z and -Z directions.

According to the electrochemical cell 200 of the present embodiment, a highly reliable the electrochemical cell 200 can be obtained.

### (Third Embodiment)

A stack of the present embodiment is a stack including the membrane electrode assembly 100 of the first embodiment. Here, descriptions of contents overlapping with those of the first embodiment and the second embodiment will be omitted.

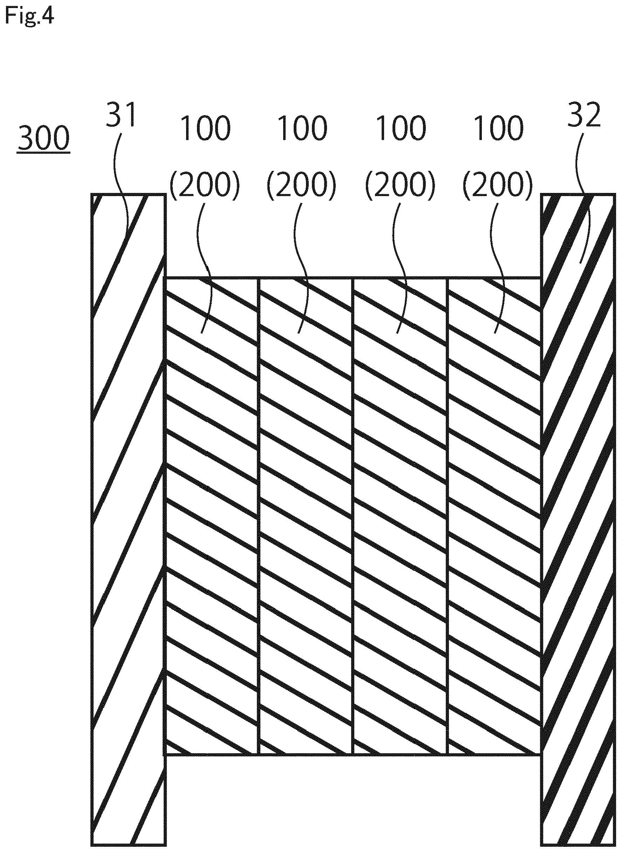

FIG. 4 is a schematic cross-sectional view showing the stack 300 of the present embodiment. The stack 300 includes a plurality of the membrane electrode assemblies 100 or the electrochemical cells 200 connected in series. The clamping plate 31 and clamping plate 32 are attached to both ends of the membrane electrode assembly 100 or the electrochemical cell 200.

According to the stack 300 of the present embodiment, a long-life the stack 300 can be obtained.

### (Fourth Embodiment)

A fourth embodiment relates to the electrolyzer. Descriptions of the contents overlapping with those of the first to third embodiments will be omitted.

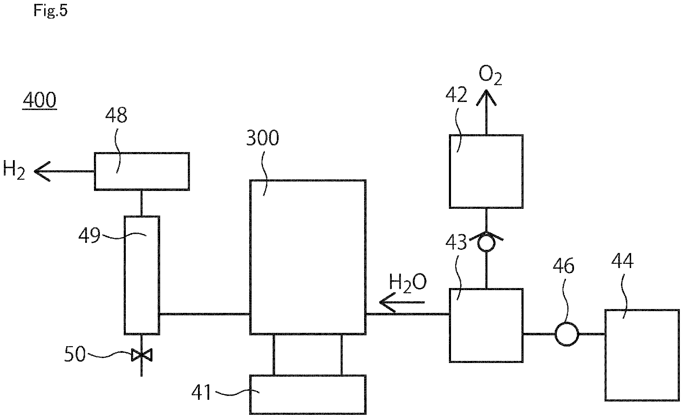

FIG. 5 is a schematic diagram of the electrolyzer 400 according to the present embodiment. The electrolyzer 400 is, for example, a hydrogen-generating device. The electrolyzer 400 includes the electrochemical cell 200 or the stack 300. The electrolyzer 400 is, for example, the electrolyzer for water electrolysis. For example, in the electrolyzer in which hydrogen is generated from ammonia, it is preferable to employ a device having a different configuration using the membrane electrode assembly 100.

The power supply 41 is attached to the stack 300. The power supply 41 applies a voltage to the stack 300. A gas-liquid separator 42 and a mixing tank 43 are connected to the anode-side of the stack 300 to separate the generated gases from the unreacted water. The mixing tank 43 is pumped by a pumping device 46 from an ion exchanged water producing apparatus 44 which supplies water. From the gas-liquid separator 42 through the check valve 47, the mixture is mixed at the mixing tank 43 and circulated to the anode.

Oxygen produced at the anode becomes oxygen gas after passing through the gas-liquid separator 42. On the other hand, a hydrogen purification device 49 connected to the gas-liquid separator 48 is used to produce high-purity hydrogen from the cathode. Impurities are discharged through a path having a valve 50 connected to the hydrogen purification device 49. In order to stably control the operating temperature, it is possible to heat the stack and the mixing tank and to control the current density at the time of thermal decomposition.

According to the electrolyzer 400 of the present embodiment, a long-life the electrolyzer 400 can be obtained.

### (Examples)

Hereinafter, Examples will be described.

### Preparation of Anode (the first electrode 2)

A Ti nonwoven substrate sized 25[cm]×25[cm] and having a thickness of 200 [µm] was prepared as the diffusion layer plate 90. The diffusion layer plate 90 was sputtered with nickel/iridium by sputtering to form sheet layers. Then, only nickel was sputtered to form a gap layer. Laminated structure was obtained so that the step of forming the sheet layer and the gap layer was repeated 40 times so that Ir per area was 0.2[mg/cm2]. Subsequently, it was washed with sulfuric acid to obtain a nickel-removed catalytic structure (the first catalyst layer 6). As a result, the first electrode 2 was obtained.

### Preparation of cathode (the second electrode 12)

The carbon paper Toray060 (manufactured by Toray Industries, Inc.) sized 25[cm]×25[cm] and a thickness of 190 [µm] was prepared as the second diffusion layer 14. On the second diffusion layer 14, a slurry obtained by using Cabot Vulcan XC 72 (the average particle size of 40nm) as the carbon particles, Carbere made by GSI Creos as the carbon fibers, and a Teflon PTFE dispersion as a water repellent agent was coated on the carbon paper and baked at 350°C. for one hour to form the hydrophobic moisture management layer 18. Next, nickel/platinum was sputtered on the hydrophobic moisture management layer 18 to form sheet layers. Then, only nickel was sputtered to form a gap layer. Laminated structure was obtained so that the step of forming the sheet layer and the gap layer was repeated 10 times so that Pt per area was 0.1[mg/cm2]. Subsequently, it was washed with sulfuric acid to obtain a nickel-removed catalytic structure (the second catalyst layer 16). As a result, the second electrode 12 was obtained.

### Forming the electrolyte membrane 20

A Nafion115 of the electrolyte membrane 20 sized 30[cm]×30[cm] was used. Solutions of tetraammineplatinum diluted with water to 11[wt %] were sprayed. A tape-masked Nafion115 was used prior to spraying. After 10 minutes from spraying, the electrolyte membrane 20 was rinsed with pure water and finally boiled at 80°C in 10wt% nitric acid for 1 hour to obtain Pt grain-impregnated electrolyte membrane.

The first electrode 2, the second electrode 12 and the electrolyte membrane 20 described above were then placed in a hot press. Pressing was performed at 160[°C], 20[kg/cm2] for 3 minutes. Thereafter, press-cooling was performed at 25 [°C] and 20[kg/cm2] for 3 minutes. As a result, the membrane electrode assembly 100 was obtained.

Next, the membrane electrode assembly 100 was subjected to steady-state water electrolysis at 80 [°C] and a current density of 2 [A/cm2]. The anodes were fed with ultrapure water at flow rate of 0.05[L/min]. Then, the cell voltage (V1) after 24 hours of operation was measured. Compared to the pre-evaluation cell voltage (VC), the voltage rise rate (V1)/ (VC) was determined.

**[Table 1]**

| | first electrode | second electrode | | | voltage-rise rate |
|---|---|---|---|---|---|
| | first catalyst layer | second catalyst layer | amount of carbon fibers in the hydrophobic moisture management layer[wt%] | thickness of hydrophobic moisture management layer [*µ*m] | |
| Example 1 | porous catalyst layer | porous catalyst layer | 1 | 30 *µ*m | 1.11 |
| Example 2 | porous catalyst layer | porous catalyst layer | 4 | 30 *µ*m | 1.21 |
| Example 3 | porous catalyst layer | porous catalyst layer | 8 | 30 *µ*m | 1.15 |
| Example 4 | porous catalyst layer | porous catalyst layer | 10 | 30 *µ*m | 1.06 |
| Example 5 | porous catalyst layer | porous catalyst layer | 20 | 30 *µ*m | 1.14 |
| Example 6 | catalyst support is used | porous catalyst layer | 8 | 30 *µ*m | 1.31 |
| Example 7 | porous catalyst layer | porous catalyst layer | 8 | 10 *µ*m | 1.17 |
| Example 8 | porous catalyst layer | porous catalyst layer | 8 | 50 *µ*m | 1.12 |
| Example 9 | porous catalyst layer | porous catalyst layer | 8 | 5 *µ*m | 1.47 |
| Example 10 | porous catalyst layer | porous catalyst layer | 8 | 60 *µ*m | 1.49 |
| Comparative Example 1 | porous catalyst layer | porous catalyst layer | 0.5 | 30 *µ*m | 6.23 |
| Comparative Example 2 | porous catalyst layer | porous catalyst layer | 23 | 30 *µ*m | 7.14 |

As shown in Table 1, in the membrane electrode assembly of Example 1 to Example 10, the voltage-rise rates were good at less than 1.5.

On the other hand, in the membrane electrode assembly of Comparative Example 1, the voltage-rise rate was too high at 6.23. In the membrane electrode assembly of Comparative Example 1, since the content of the carbon fiber in the hydrophobic moisture management layer was too small as 0.5wt%, the gas-permeability was insufficient. Therefore, peeling of the second catalyst layer 16 and the electrolyte membrane 20 occurred.

In the membrane electrode assembly of Comparative Example 2, the voltage-rise rate was too high at 7.14. In the membrane electrode assembly of Comparative Example 2, it is presumed that the performance deterioration occurred because the hydrophobic moisture management layer of the carbon fiber in the hydrophobic moisture management layer was too large, i.e., 23wt%, so that porosity of the hydrophobic moisture management layer was increased and the conductivity was lowered.

In particular, in Example 1, Example 2, Example 3, Example 4, Example 5, Example 7, and Example 8 in which the porous catalyst layer was used for the first catalyst layer 6 and the film thickness of the hydrophobic moisture management layer 18 was 10µm or more and 50µm or less, a low-voltage rise rate of less than 1.3 was obtained.

While certain embodiments and examples have been described, these embodiments and examples have been presented by way of example only, and are not intended to limit the scope of the inventions. These novel embodiments can be implemented in various other forms, and various omissions, replacements, and modifications can be made without departing from the gist of the invention. These embodiments and variations thereof fall within the scope and spirit of the invention, and fall within the scope of the invention described in the claims and equivalents thereof.

The above-described embodiments can be summarized in the following technical proposals.

### (Technical proposal 1)

A membrane electrode assembly comprising:
a first electrode including
   a first diffusion layer, and
   a first catalyst layer;
a second electrode for generating hydrogen, the second electrode including
   a second diffusion layer,
   a second catalyst layer including a second porous catalyst layer including a porous precious metal or sheet-like precious metal, and
   a hydrophobic moisture management layer provided between the second catalyst layer and the second diffusion layer, the hydrophobic moisture management layer including carbon particles and carbon fibers, a weight of the carbon fibers being between 1wt% and 20wt% of a weight of the second diffusion layer; and
an electrolyte membrane provided between the first electrode and the second electrode, the first catalyst layer being provided between the first diffusion layer and the electrolyte membrane, and the second catalyst layer being provided between the second diffusion layer and the electrolyte membrane.

### (Technical proposal 2)

The membrane electrode assembly according to technical proposal 1, wherein the first catalyst layer includes a porous catalyst layer including porous precious metal or sheet-like precious metal.

### (Technical proposal 3)

3 . The membrane electrode assembly according to technical proposal 1 or 2, wherein the hydrophobic moisture management layer has a thickness of 10µm or more and 50µm or less.

### (Technical proposal 4)

4. The membrane electrode assembly according to any one of technical proposal 1 to 3, wherein the hydrophobic moisture management further includes a water repellent agent.

### (Technical proposal 5)

5. The membrane electrode assembly according to any one of technical proposal 1 to 4, wherein the first catalyst layer is a first porous catalyst layer.

### (Technical proposal 6)

6. The membrane electrode assembly according to any one of technical proposal 1 to 5, wherein an average primary particle size of the carbon particles and the carbon fibers is preferably 10nm or more and 300nm or less.

### (Technical proposal 7)

7. An electrochemical cell including the membrane electrode assembly according to any one of technical proposal 1 to 6.

### (Technical proposal 8)

8. A stack including the membrane electrode assembly according to any one of technical proposal 1 to 6.

### (Technical proposal 9)

9. An electrolyzer including the membrane electrode assembly according to any one of technical proposal 1 to 6.

## Claims

1. A membrane electrode assembly comprising:
a first electrode including
a first diffusion layer, and
a first catalyst layer;
a second electrode for generating hydrogen, the second electrode including
a second diffusion layer,
a second catalyst layer including a second porous catalyst layer including a porous precious metal or sheet-like precious metal, and
a hydrophobic moisture management layer provided between the second catalyst layer and the second diffusion layer, the hydrophobic moisture management layer including carbon particles and carbon fibers, a weight of the carbon fibers being between 1wt% and 20wt% of a weight of the second diffusion layer; and
an electrolyte membrane provided between the first electrode and the second electrode, the first catalyst layer being provided between the first diffusion layer and the electrolyte membrane, and the second catalyst layer being provided between the second diffusion layer and the electrolyte membrane.

2. The membrane electrode assembly according to claim 1, wherein the first catalyst layer includes a porous catalyst layer including porous precious metal or sheet-like precious metal.

3. The membrane electrode assembly according to claim 1 or 2, wherein the hydrophobic moisture management layer has a thickness of 10µm or more and 50µm or less.

4. The membrane electrode assembly according to any one of claims 1 to 3, wherein the hydrophobic moisture management further includes a water repellent agent.

5. The membrane electrode assembly according to any one of claims 1 to 4, wherein the first catalyst layer is a first porous catalyst layer.

6. The membrane electrode assembly according to any one of claims 1 to 5, wherein an average primary particle size of the carbon particles and the carbon fibers is preferably 10nm or more and 300nm or less.

7. An electrochemical cell including the membrane electrode assembly according to any one of claims 1 to 6.

8. A stack including the membrane electrode assembly according to any one of claims 1 to 6.

9. An electrolyzer including the membrane electrode assembly according to any one of claims 1 to 6.
